# EUROPÄISCHE PATENTSCHRIFT

(11) **EP 3 077 878 B1**
(45) Veröffentlichungstag und Bekanntmachung des Hinweises auf die Patenterteilung: **07.07.2021**
(21) Anmeldenummer: 14809380.0
(22) Anmeldetag: 05.12.2014
(51) Int. Cl.: G05B 19/418, G05B 23/02

(54) **COMPUTER-IMPLEMENTIERTES VERFAHREN UND SYSTEM ZUR AUTOMATISCHEN ÜBERWACHUNG UND STATUSERMITTLUNG GANZER PROZESSABSCHNITTE IN EINER PROCESS UNIT**
COMPUTER-IMPLEMENTED METHOD AND SYSTEM FOR AUTOMATIC MONITORING AND STATUS DETECTION OF ENTIRE PROCESS STAGES IN A PROCESS UNIT
PROCÉDÉ IMPLÉMENTÉ PAR ORDINATEUR ET SYSTÈME DE SURVEILLANCE AUTOMATIQUE ET DE DÉTERMINATION DE L'ÉTAT DE L'INTÉGRALITÉ DES ÉTAPES DE PROCESSUS DANS UNE UNITÉ DE TRAITEMENT

(30) Priorität: 05.12.2013 EP 13195897
(43) Veröffentlichungstag der Anmeldung: 12.10.2016
(73) Patentinhaber: Bayer Aktiengesellschaft, 51373 Leverkusen (DE)
(72) Erfinder: ROSS, Thomas, 51063 Köln (DE)
(74) Vertreter: BIP Patents
(86) Internationale Anmeldenummer: PCT/EP2014/076677
(87) Internationale Veröffentlichungsnummer: WO 2015/082669

(56) Entgegenhaltungen:
- EP-A2- 0 893 746
- DE-A1- 10 241 746
- DE-A1-102009 025 855
- US-A1- 2013 024 415
- None

## Beschreibung

Die Erfindung betrifft ein Verfahren und ein computer-implementiertes System zur automatischen computer-implementierten Überwachung und Statusermittlung ganzer Prozessabschnitte in einer Process Unit.

Vor dem Hintergrund einer zunehmend heterogenen Systemlandschaft sowie des ständig steigenden Automatisierungsgrades von Anlagen gewinnen innovative Assistenzsysteme und Plant Asset Management (PAM) Lösungen für den Operator immer mehr an Bedeutung. Dabei kommt der Überwachung und Diagnose von Apparaten, Geräten und Automatisierungstechnik einer Process Units eine Schlüsselrolle zu.

Eine zentrale Zielsetzung des modernen Plant Asset Managements liegt in der Steigerung der Anlagenverfügbarkeit und der Anlagennutzung durch Zustandsüberwachung von Feldgeräten und Anlagenkomponenten (Asset Monitoring).

Auf der Geräteebene existieren in vielen Fällen bereits Asset-Statusinformationen. Beispielsweise haben sich die sog. intelligenten Feldgeräte in vielen Betrieben schon weitgehend etabliert. Ebenso werden auf der Ebene der komplexeren Maschinen und Apparate, wie etwa Pumpen oder Wärmetauschern, Condition Monitoring Systeme bereits angeboten und sind verfügbar [Mühlenkamp, S., Geipel-Kern, A.: Plant Asset Management: In der Diagnose mechanischer Assets schlummert ungenutztes Potenzial, PROCESS, (2011) Nr. 3, 36-38]. Aber auch hier ist die aufgabengerechte Verdichtung der Statusinformationen für den Anwender zwingend erforderlich.

Für die Überwachung und Diagnose bereits einfacher Apparatecluster und ganzer Teilanlagen stehen zur Prozessführung bereits standardmäßig eine Vielzahl von Informationen, wie Mess- und Stellgrößen, zur Verfügung. Häufig haben die Anwender allerdings keine Möglichkeit, die Informationen in vollem Umfang zu nutzen. Um hier frühzeitig Hinweise über schleichende Verschlechterungsprozesse zu gewinnen, kommt einer automatisierten Verdichtung sowie deren Abgleich mit dem aktuellen Betriebszustand zur echtzeitfähigen Bewertung der Asset Gesundheit eine Schlüsselrolle zu [Ross, T,. Ochs, S., Frey, C.W.: Neue Software zur Überwachung "nicht intelligenter" Anlagenteile - Teil 1, Chemie Technik, (2011) Ausgabe 11, S. 18-20.]. Denn erst auf der Basis derartiger, gesicherter Erkenntnisse ist eine Prognose und schließlich eine Ableitung geeigneter Maßnahmen möglich, etwa im Sinne der vorausschauenden Wartung, aber auch der Produktions- bzw. Stillstandsplanung. Zuverlässige Asset-Statusinformationen bilden daher die Grundlage für vielfältige und unterschiedliche, für den Geschäftserfolg wesentliche Unternehmensentscheidungen.

Ähnliche Systeme und Verfahren sind beispielsweise in den folgenden Dokumenten des Standes der Technik offenbart:
D1: US 2013/024415 A1 (HERZOG JAMES P [US]) 24. Januar 2013 (2013-01-24);
D2: DE 10 2009 025855 A1 (GEN ELECTRIC [US]) 3. Dezember 2009 (2009-12-03);
D3: EP 0 893 746 A2 (ABB PATENT GMBH [DE]) 27. Januar 1999 (1999-01-27);
D4: DE 102 41 746 A1 (HAAG GUENTER [DE]) 18. März 2004 (2004-03-18).

Es bestand daher die Aufgabe, ein System und ein Verfahren zur Überwachung von prozesstechnisch zusammenhängenden Anlagenteilen (Process Units) zu entwickeln, welches sich ohne erhebliche Engineering- und Modellierungsaufwände auf Basis der bestehenden Feldinstrumentierung für die Asset Überwachung von Betrieben nutzen lässt, dem Anwender ein zuverlässiges sowie einfach und schnell zu bedienendes Überwachungswerkzeug darstellt, wobei die Asset-Statusinformationen pro Process Unit automatisch verdichtet und aggregiert in einfacher Form dargestellt ist. Es sollten Asset-Statusinformationen über die Ebene der intelligenten Feldgeräte hinaus, auch von "nicht intelligenten" Anlagenteilen und von Teilanlagen verfahrenstechnischer Betriebe bereitgestellt werden. Hierfür bestand die Aufgabe darin, eine technische Softwarelösung bereitzustellen, die ermöglicht, dass die Schwellwertsetzung und damit die Unterscheidung zwischen Gutzustand und Abweichungen davon, automatisch während des Verfahrens ermittelt werden.

Im Sinne der Anmeldung sind intelligente Feldgeräte, die sich mittels Sensoren und / oder Diagnose-Software selber überwachen.

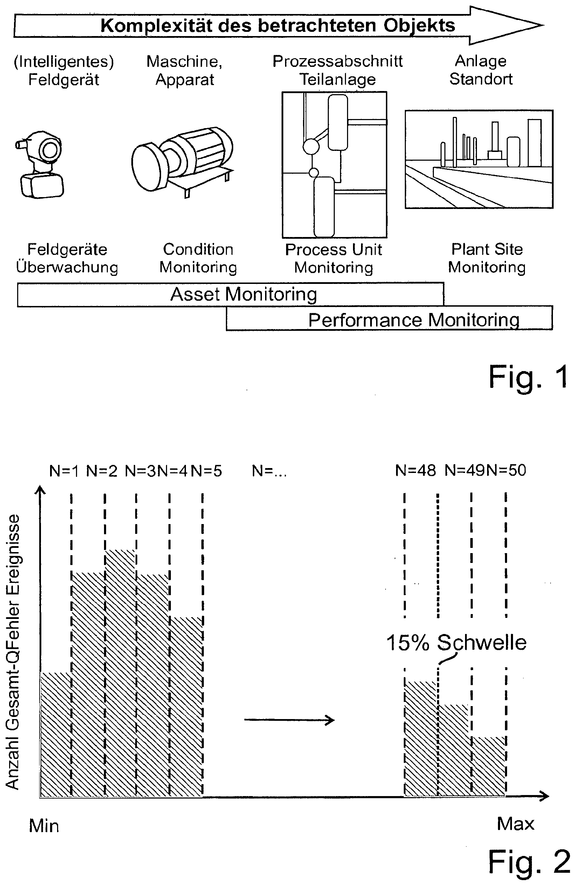

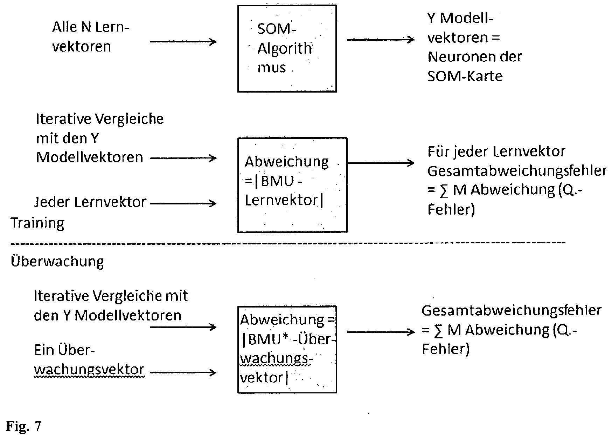

Die Überwachung von prozesstechnisch zusammenhängenden Anlagenteilen wurde durch ein computer-implementiertes Verfahren zur Überwachung von prozesstechnisch zusammenhängenden Anlagenteilen, die eine oder mehrere Prozess Units umfassen, gelöst, das folgende Schritte umfasst:
Im Schritt a) werden M zu überwachenden Prozessparameter, und deren Messbereichsgrenzen angelegt. Die Messbereichsgrenzen dienen zur Parametrierung des Modells (vergl. [Frey, C. W.: Prozessdiagnose und Monitoring feldbusbasierter Automatisierungsanlagen mittels selbstorganisierender Karten und Watershed-Transformation, at-Automatisierungstechnik 56 (2008) Nr. 7, S. 374-380]). Die Eingabe erfolgt üblicherweise über ein User Interface. Die Eingaben werden in einem Modul zur Definition der Prozess Unit gespeichert.
Im Schritt b) werden Lerndatenphasen bestehend aus potentiellen Lernvektoren in ein Datenbankmodul importiert. Die Lerndatenphasen werden üblicherweise aus einer Prozessdatenbank eines Prozessleitsystems importiert. Diese Lerndatenphasen bestehen aus potentiellen Lernvektoren jeweils definiert durch die Ist-, Soll-, und / oder Stellwerten für die M Prozessparameter aus Schritt a) und ein Zeitstempel t. Die Übertragung der Lerndatenphasen aus der Prozessdatenbank erfolgt über ein Daten-Interface (OPC, SQL); die importierten Lerndatenphasen werden in dem Datenbankmodul gespeichert. Das Datenbankmodul ist außerdem mit einem neuronalen Netz basierten Modellmodul verbunden.
Im Schritt c) werden in dem Datenbankmodul aus den Lerndatenphasen aus b) N Lernvektoren selektiert. Diese Selektion erfolgt typischerweise durch den Nutzer über den User Interface.
Im Schritt d) werden die selektierten Lernvektoren aus Schritt c) automatisch in das Modellmodul übertragen. Mit diesen Lernvektoren wird ein neuronales-Netz-basiertes Modell vollautomatisch mittels eines datengetriebenen Algorithmus erstellt. Hierfür wird jeder Lernvektor iterativ zu einem Neuron mit einem geringsten Abstand zum Lernvektor zugeordnet, bis die Neuronen eine selbstorganisierende Neuronenkarte (SOM) bilden (vergl. dazu http://en.wikipedia.org/wiki/Self-organizing_map, Frey, C. W.: Prozessdiagnose und Monitoring feldbusbasierter Automatisierungsanlagen mittels selbstorganisierender Karten und Watershed-Transformation, at-Automatisierungstechnik 56 (2008) Nr. 7, S. 374-380). Das so trainierte Modell bildet den Gutzustand (Referenz) der zu überwachenden Anlagenteilen ab.
Im Schritt e) werden folgende Merkmale des Modells automatisch berechnet (vergl. Fig. 7):
   - Ein Abweichungsfehler als der Abstand jedes Prozessparameterwertes eines Lernvektors an den entsprechenden Prozessparameterwert der ihm zugeordneten Best Matching Unit (= Neuron mit dem geringsten Abstand),
   - für jeden der N Lernvektoren ein Gesamtabweichungsfehler als die Summe der Abweichungsfehler seiner M Prozessparameter,
   Im Ergebnis ergibt sich ein Residuum. Hierfür werden die Abweichungsfehler für alle M Prozessparameter jeder der N Lernvektoren berechnet, d.h. es werden anzahlmäßig MxN Abweichungen plus N Gesamtabweichungsfehler in einer Matrix berechnet.
Im Schritt f) werden die N Gesamtabweichungsfehler aus Schritt e) in ein Modul zur Analyse der Abweichungsfehler übertragen. In diesem Modul wird ein Minimal- und Maximalwert der N Gesamtabweichungsfehler automatisch berechnet. Der Minimal- bzw. Maximalwert der N Gesamtabweichungsfehler gibt eine zusammenfassende einfache Definition des Gutzustands anhand dessen die spätere Überwachung der Anlagen gewährleistet werden kann. Weiterhin vorteilhaft ist, dass der Gesamtabweichungsfehler berücksichtigt, dass ggf. nicht nur ein Prozessparameter allein sondern eine Kombination von Prozessparametern den tatsächlichen Gutzustand der Prozess Unit beschreiben. In einer bevorzugten Ausführungsform wird außerdem mindestens ein Schwellwert für den Gesamtabweichungsfehler automatisch berechnet und gesetzt. In dieser besonderen Ausführungsform umfasst das Verfahren folgende weitere Schritte für die automatische Setzung des Schwellwertes:
   - der ermittelte Wertebereich der Gesamtabweichungsfehler dient als Basis für ein Histogramm der Gesamtabweichungsfehler. Er wird in 10 bis 100, bevorzugt 15 bis 75, besonders bevorzugt 50 äquidistante (Wertebereich-) Segmente unterteilt.
   - Die Gesamtabweichungsfehler der Lernvektoren werden in die Segmente automatisch einsortiert. Eine Basisschwelle (vergl. Abb. 2) wird mit folgenden Schritten automatisch gesetzt: Basisschwelle = erste Segmentstützstelle, für die gilt, dass sich ≥ 5 bis 15%, bevorzugt ≥ 15% der höchsten Gesamtabweichungsfehler innerhalb der Segmente ausgehend vom Maximalwert befinden (vergl. Abb. 2). Dabei gilt für die Basisschwelle die weitere Bedingung, dass die Basisschwelle sich im Bereich der obersten 7/10 der Segmente ausgehend vom Maximalwert befinden muss, d. h. bei einer Teilung in 50 Segmente im Bereich des 15.ten bis 50.ten Segmentes, und bei einer Teilung in 100 Segmente im Bereich des 30.ten bis 100.ten Segmentes,. Wenn sich die Basisschwelle außerhalb dieses Bereichs befinden sollte, gilt für das automatische Nachstellen der Basisschwelle der Prozentsatz ≥ 5% statt ≥ 15% der höchsten Gesamtabweichungsfehler.
Im Schritt g) erfolgt zur Überwachung der Prozess Units eine automatische Übertragung der online überwachten M Prozessparameterwerte (vergl. Fig. 7) zu einem Zeitpunkt t in das Datenbankmodul; diese bilden Überwachungsvektoren der Process-Unit über die Zeit. Die Überwachungsvektoren werden von dem Datenbankmodul in das Modellmodul weitergeleitet.
Im Schritt h) erfolgt in dem Modellmodul eine automatische Zuordnung jedes Überwachungsvektors aus Schritt g) zu seiner Best Matching Units der Neuronenkarte (SOM) aus Schritt c) durch Vergleich der Prozessparameterwerte des Überwachungsvektors mit den Prozessparameterwerten jedes Neurons der Neuronenkarte und Selektion eines Neurons auf Basis des geringsten Abstands,
Im Schritt i) eine automatische Berechnung der Abweichungsfehler jedes Prozessparameterwerts des Überwachungsvektors im Vergleich zu dem Prozessparameterwert der ihm zugeordneten Best Matching Unit und die Berechnung des Gesamtabweichungsfehlers des Überwachungsvektors. Diese Berechnung wird im Modul zur Analyse der Abweichungsfehler durchgeführt.
Im Schritt j) werden die Gesamtabweichungsfehler jedes Überwachungsvektors im Vergleich zum berechneten Minimal- und Maximalwert der Gesamtabweichungsfehler, bevorzugt im Vergleich zur Basisschwelle, besonders bevorzugt im Vergleich zur Basisschwelle multipliziert durch ein Toleranzbereich in Form eines ganzzahligen positiven Faktor von üblicherweise 2-4 erfahrungsgemäß vorzugsweise 3, über den User Interface angezeigt.

Zur Klarheit werden wesentliche Begriffe der Beschreibung folgendermaßen definiert:
- Eine Process Unit ist ein Anlagenteil oderein prozesstechnisch zusammenhängender Prozessabschnitt, der mit der Erfindung auf Basis der bestehenden Sensorik/Aktorik, d.h. vom Prozessexperten selektierten Prozessparametern überwacht werden kann. In der erfindungsgemäßen Lösung können mehrere Process Units zur Überwachung definiert werden.
- Lerndatenphasen sind Phasen, die in Gänze oder abschnittsweise zum Trainieren des neuronalen-Netz-basierten Modells selektiert werden können und bestehen aus Zeitstempeln und entsprechend Lernvektoren der Dimension (Mx1).
- Eine Überwachungsphase ist eine Phase, in der eine Prozess Unit überwacht wird und besteht aus einer Anzahl von Überwachungsvektoren.
- Die Prozessparameter wurden oder werden in einer Phase - Lernphase bzw. Überwachungsphase - zu diskreten Zeitpunkten (=Zeitstempel) abgetastet. Bei einer Abtastrate von 1/min, liegt nach der Überwachung pro Minute ein Vektor im Prozessdatenarchiv (=Prozessdatenbank) vor.
- Ein Lernvektor bzw. Überwachungsvektor - wird durch die Werte der im Schritt a) eingegebenen M Prozessparametern und einem Zeitstempel t definiert. Bei M Prozessparametern hat er die Dimension (Mx1), d. h. M Parameterwerte. Die Werte der Prozessparameter sind üblicherweise die überwachten Ist-Werte der Process Units. Im Fall von Prozess-Regelungen können auch die Soll-Werte (auch Führungsgröße genannt) und / oder Stell-Werte (auch Stellgröße genannt) der Prozessparameter einbezogen werden. Auch eine Kombination dieser Werte zur Definition eines Lernvektors ist möglich. Typischerweise wird ein Überwachungsvektor durch seine M Ist-Werte bei einem Zeitstempel t definiert.
- Abweichungsfehler, auch Quantifizierungsfehler oder QFehler genannt, beschreiben den Anpassungsgrad des Modells an die Lernvektoren bzw. den Anpassungsgrad des Überwachungsvektors an das Modell. Der Abweichungsfehler ist das Abstandsmaß zwischen dem durch den Algorithmus berechneten Best Matching Unit (BMU) und dem präsentierten Lern- bzw. Überwachungsvektor. Für jeden Lernvektor bzw. Überwachungsvektor der Dimension (Mx1) werden M Abweichungsfehler berechnet. Mit anderen Worten werden die Parameterwerte jedes Lernvektors mit den Parameterwerten der Best Matching Unit verglichen und den euklidischen Abstand zwischen diesen Parameter berechnet.
- Der Gesamtabweichungsfehler, auch Gesamtquantifizierungsfehler, Gesamt-QFehler oder Gesamtfehler genannt, entspricht der Summe aller Abweichungsfehler eines Vektors.
- Das Residuum einer oder mehrerer Lerndatenphasen mit in der Summe N Zeitstempeln und Lernvektoren der Dimension (Mx1) besteht aus der Matrix aus MxN Abweichungsfehlern. Das Residuum lässt sich als Qualitätsmerkmal für das Modell verwenden. Bei der vorliegenden Erfindung werden auch die N Gesamtabweichungsfehler in der Residuum Matrix aufgenommen.
- BMU, Best Matching Unit oder bestpassende Neuron: Wird dem neuronalen Netz ein Lern- bzw. Überwachungsvektor präsentiert, gibt es immer ein "Gewinnerneuron" (z.B. euklidischen Abstand minimal), welches am besten mit dem präsentierten Vektor übereinstimmt, d. h. das Neuron mit dem geringsten Abweichungsfehler. Dieses heißt Best Matching Unit oder BMU und ist durch seine M Prozessparameterwerte definiert. Mit anderen Worten wird ein Modellvektor berechnet definiert durch seine M Parameter. Für die Berechnung der Best-Matching Unit einer selbstorganisierenden Neuronenkarte wird auf dem Stand der Technik verwiesen wie z. B. http://en.wikipedia.org/wiki/Self-organizing_map sowie auf Frey et al. [Frey, C. W.: Prozessdiagnose und Monitoring feldbusbasierter Automatisierungsanlagen mittels selbstorganisierender Karten und Watershed-Transformation, at-Automatisierungstechnik 56 (2008) Nr. 7, S. 374-380].
Wie die meisten neuronale Netze arbeiten die Neuronenkarte in zwei Phasen: Training (=Lernphase) und Zuordnung (=Mapping/Anwendungsphase). Das Training bildet die Neuronenkarte mit Hilfe von Lernvektoren, wobei Mapping die automatische Zuordnung eines neuen Vektors, z. B. ein Überwachungsvektor, ist. Diese Phasen sind auf Fig. 7 schematisch dargestellt.

Üblicherweise kann das Verfahren auf einem etwas leistungsfähigeren handelsüblichen Computer und durch eine auf diesem Computer installierte Software ausgeführt werden. Es werden keine besonderen Anforderungen an die Hardware gestellt. Die Erfindungsgemäße Lösung bedarf keine erhebliche Engineering- und Modellierungsaufwände und kann auf Basis der bestehenden Feldinstrumentierung zum Einsatz kommen.

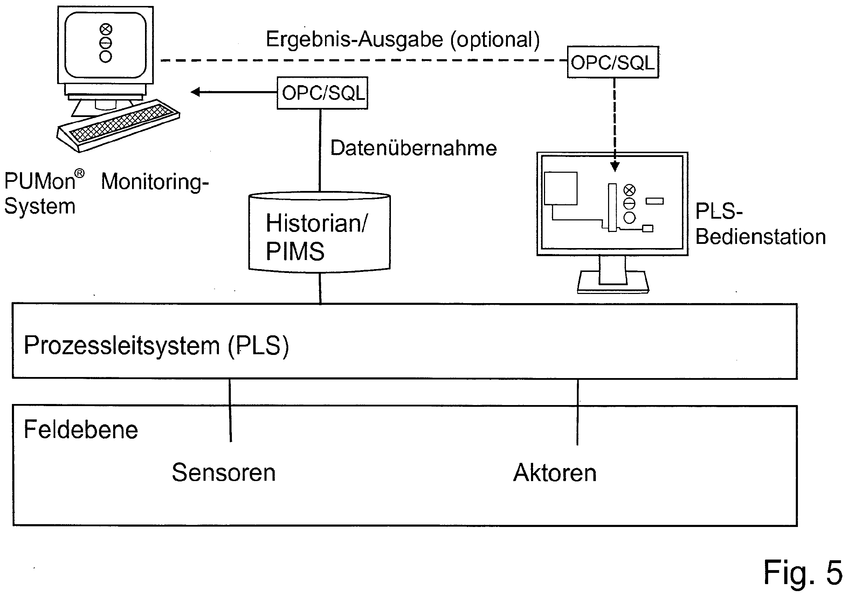

Zur Anbindung des Computers inkl. Software an die Prozessüberwachung verfügt der Process Unit Monitor üblicherweise über OPC-, ODBC- und SQL-Schnittstellen. Im Fall der OPC-Schnittstelle werden die historischen Daten aus Schritt b) bzw. c) über OPC-HDA und Echtzeitdaten (=Überwachungsvektoren) aus Schritt g) über OPC-DA aus der Datenbank des ProzessLeitsystems akquiriert. (Fig. 5)
Üblicherweise werden nach außen die Statusinformationen zusätzlich pro Process Unit mittels des internen OPC-DA Servers zu Verfügung gestellt.

Im Schritt a) sind als übliche zu überwachende zusammengehörige Anlagenteile (Process Units) bzw. Teilanlagen (Prozessabschnitte) definiert. Diese Anlagenteile oder Prozessabschnitte sind durch ihre zu überwachenden M Prozessparameter charakterisiert. Beispiele für Anlageteile sind Destillationskolonne, Wärmetauscher-Pumpe Kombination, Trockner, Schneckenextruder oder Kessel samt angeschlossener Peripherie - wie Rohrleitungen und Instrumentierung. Hier legt der Prozessexperte die zur Überwachung notwendige Sensorik/Aktorik und die zugehörigen Messbereiche fest. Er bestimmt, welche Prozessparameter - Drücke, Temperaturen, Durchflüsse, etc. - in die Überwachung einbezogen werden und welche nicht. Relevant sind üblicherweise alle Ist-, Soll- und /oder Stellwerte der betrachteten funktionalen Überwachungseinheit. Die Software unterstützt die Konfiguration, indem Prozessparameter einfach an und abgewählt werden können. In einer besonderen Ausführungsform werden zusätzlich bestimmte Prozessparameter als "obligatorisch" und / oder als "Schlüsselvariable" deklariert.

Obligatorische Prozessparameter sind Prozessparameter, die für die Überwachung notwendig sind. Fällt ein obligatorischer Prozessparameter in der Überwachung aus, wird diese üblicherweise automatisch deaktiviert und der Prozess Unit Status "Ampel" wechselt von "rot", "gelb" oder "grün" nach "grau". Eine solche Änderung informiert den Nutzer über den Ausfall einer Sensorik/Aktorik in der Prozess Unit.

Schlüsselvariable sind obligatorische Parameter, die außerdem den zuvor definierten Wertebereich nicht verlassen dürfen. Dazu wird vorzugsweise der Minimal und / oder der Maximal Wert einer jeden Lerndatenphase um einen einstellbar hohen Prozentsatz nach unten und oben als Toleranzbereich erweitert. Das Modell ist typischerweise nur in diesem zuvor definierten und erweiterten Wertebereich trainiert. Verlässt der Überwachungsvektor die so erweiterten Wertebereiche, wird die Überwachung der Prozess Unit samt Status Ampel ebenfalls deaktiviert und "grau". Im Fall einer Lastvariable (Feed) kann so verhindert werden, dass die Überwachung auf untrainierte Prozesszustände angewendet wird. Es gilt: Schlüsselvariable sind automatisch auch obligatorische Parameter. Umgekehrt ist das nicht der Fall.

In Schritt b) importiert der Anwender potenzielle Lerndatenphasen (Aquisedaten). Diese werden zur nachfolgenden Begutachtung automatisch in der internen Datenbank (=Datenbankmodul) gespeichert.

Im Schritt c) kann der Prozessexperte die potenziellen Lerndatenphasen visualisieren und im Anschluss daraus Lern- bzw. Referenzdatensätze (ausgewählte Lerndatenphasen) selektieren , in denen die Anlage den Anforderungen entsprechend dem Gutzustand gefahren wurde. Bevorzugt werden Lern- bzw. Referenzdatensätze für mehrere Produkte bzw. Lastzustände in das Modell eingegeben. Dazu wird in Schritt a) ein Last- bzw. Produktparameter einbezogen, der die verschiedenen Anlagenzustände (Produkt und / oder Lastzustände) markiert. Dieser wird üblicherweise als zusätzlicher "Prozessparameter" mittrainiert. Mit anderen Worten können als Prozessparameter nicht nur Daten über die Sensorik/Aktorik sondern bevorzugt auch Daten über Produkt und / oder Lastzustände benutzt werden. Dadurch reduzieren sich die Aufwände für die Modellerstellung und Überwachung.

Alternativ zum Import durch den Anwender und Selektion über das User Interface kann der Prozessexperte eine ausführliche Definition des Gutzustands im Schritt a) durchführen, die dann einen automatischen Import (Schritt b) und / oder Selektion (Schritt c) von Lerndatenphasen ermöglicht.

Im Schritt d) wird das neuronale Netz basierte Modell des Gutzustands berechnet. Das Training des neuronalen-Netz-basierten Modells erfolgt üblicherweise nach den Lernregeln von Frey et al. [Frey, C. W.: Prozessdiagnose und Monitoring feldbusbasierter Automatisierungsanlagen mittels selbstorganisierender Karten und Watershed-Transformation, at-Automatisierungstechnik 56 (2008) Nr. 7, S. 374-380]. Der zu Grunde liegende Algorithmus basiert auf sog. selbstorganisierenden Karten (SOM) und die datengetriebene Modellerstellung nutzt Prozessinformationen (aus der angeschlossenen Aktorik / Sensorik), wie z.B. Temperaturen, Durchflüsse, Drücke, Motorströme, etc, aus zu überwachenden Anlagenteils bzw. der zu überwachenden Teilanlage. Der mathematische Kemalgorithmus für das Überwachen von Anlagenteilen wurde zuvor bereits erfolgreich im Rahmen eines Diagnosekonzepts für feldbusbasierte Automatisierungsanlagen eingesetzt [Ross, T., Hedler, C. , S., Frey, C.W: Neue Softwarewerkzeug zur Überwachung "nicht intelligenter" Anlagenteile und Teilanlagen In: AUTOMATION 2012 13. Branchen- treff der Mess-und Automatisierungstechnik. VDI-Berichte 2171. Baden-Baden, 2012, S. 231 - 235, ISBN 978-3-18-092171-6].

Dank der Anwendung eines neuronalen Netzes konnte das Werkzeug derart konzipiert werden, dass sich der Anwender die Überwachungsmodelle eigenhändig - sozusagen per Knopfdruck - innerhalb einer Minute erzeugen kann und sie im Anschluss sofort für die Überwachung verwenden kann. Dazu wählt sich der Prozessexperte die notwendigen Prozessinformationen in Form von sog. Lern- oder auch Referenzdatensätzen aus. Dieser datengetriebene Ansatz unterscheidet sich grundlegend von der Vorgehensweise bei analytisch modellbasierten Methoden. Diese erfordern eine aufwändige Modellierung und viel Erfahrung vonseiten der Entwickler. Ändert sich der Prozess, z. B. weil bauliche oder prozessoptimierende Maßnahmen durchgeführt wurden, muss auch das analytische Modell entsprechend angepasst werden. Zusätzliche Modellierungsaufwände sind die Folge. Dagegen bedarf es bei dem hier vorgestellten datengetriebenen Ansatz lediglich einer neuerlichen Anpassung des Modells durch den Anwender. Das neuronale-Netz-basierte Modell ist durch Training anpassungsfähig bei Änderung des Inputs.

Zusammenfassend bildet das trainierte Modell den Gutzustand (Referenz) des zu überwachenden Prozessabschnittes ab. Abweichungen zum Modell werden flexibel und in einer bevorzugten Ausführungsform der Erfindung automatisch in Schwellwerten, mindestens in einer Basisschwelle besonders bevorzugt multipliziert durch den Toleranzbereich in Form eines ganzzahligen positiven Faktor von üblicherweise 2-4 erfahrungsgemäß vorzugsweise 3 übersetzt.

Bei der Berechnung der Basisschwelle wird die Anzahl der Segmente auf Basis von Erfahrungswerten gesetzt und beträgt üblicherweise von 10 bis 100, bevorzugt 15 bis 75, besonders bevorzugt 50. Die Auflösung des Wertebereiches muss hoch genug sein um die Schwelle präzise setzen zu können. Dies ist bei mindestens 50 Segmenten gegeben. Bei der Definition der Anzahl der Segmente soll der Nutzer aber achtgeben, dass die Auflösung nicht zu hoch wird- also dem Problem angepasst bleibt. Sonst kann es zu zahlreichen unbesetzten Segmenten kommen, was zu unnötig hohem Rechenaufwand führt. Bei der Einsortierung der Lernvektoren anhand deren Gesamtabweichungsfehler in die Segmente kann in seltenen Fällen vorkommen, dass sich mehr als 85% der Ereignisse im 1.ten bis zum 15.ten Segment befinden und der Rest auf die Segmente 16-50 verteilt. In diesem Fall würde der %-Satz von ≥15 % der Lerndatenvektoren mit dem Gesamtabweichungsfehler ≥ Basisschwelle zu tief gesetzt. Daher wird der %-Satz der Lerndatenvektoren mit dem Gesamtabweichungsfehler ≥ Basisschwelle üblicherweise nach ≥ 5% der Ereignisse mit den höchsten Werten gesetzt. Besonders bevorzugt wird die berechnete Basisschwelle durch einen Toleranzbereich in Form eines ganzzahligen positiven Faktor von üblicherweise 2-4 erfahrungsgemäß vorzugsweise 3 multipliziert.

Optional können auch die Abweichungsfehler in das Modul zur Analyse der Abweichungsfehler übertragen werden und eine Basisschwelle für jeden Prozessparameter ermittelt werden. Ein weiteres Output des Verfahrens ist dann eine Zuordnung des betrachteten Parameters jedes Überwachungsvektors im Vergleich zu einer vorparametrierten Schwelle (Basisschwelle mal der positiver ganzzahliger Faktor) des betrachteten Parameters.

Wird das System für die Überwachung einer Prozess Unit über längere Zeit eingesetzt, wächst die Anzahl von anwendbaren Lerndatensätzen. Es ist ggf. vorteilhaft, das Training des neuronalen Netzes zu wiederholen, um neue Lernsätze im Modell des Gutzustands zu berücksichtigen. Die Modellaktualisierung sollte idealerweise als Teil einer gelebten PAM-Strategie in den betrieblichen Alltag integriert werden. Die Aufwände sind Dank der einfachen Bedienung und der geringen Anzahl an Arbeitsschritten überschaubar. Und auch für die Aktualisierung eines Modells braucht es in der Regel nur wenige Minuten.

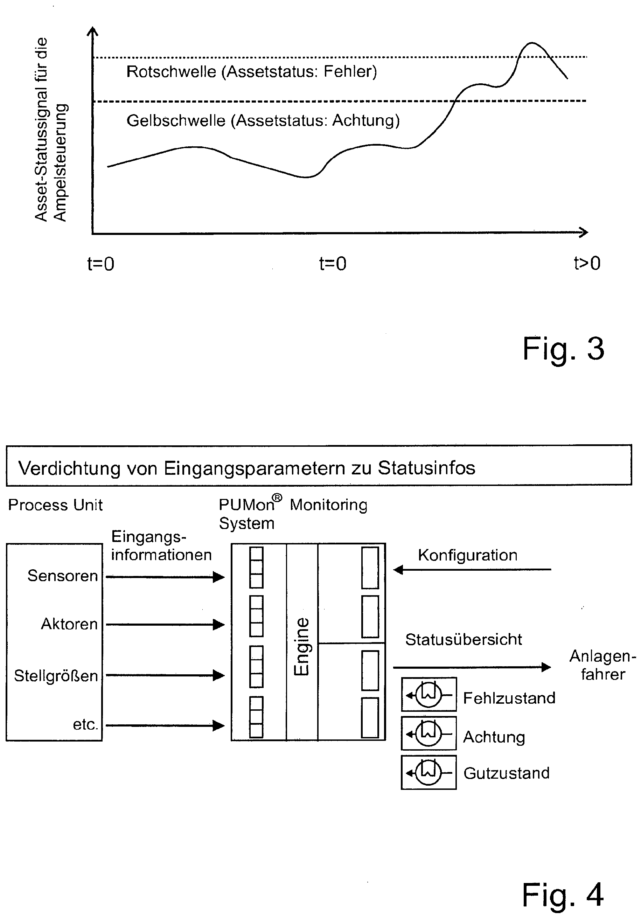

Für eine bessere Bedienbarkeit wird der Output bevorzugt in Form eines Ampelsystems wie auf Fig. 3 dargestellt. Für die Rotschwelle wird üblicherweise die ermittelte Basisschwelle standardmäßig mit dem zusätzlichen positiver ganzzahliger Faktor als Einstellparameter (Wert = 3) multipliziert und die Gelbschwelle standardmäßig aber einstellbar auf 75% der Höhe der Rotschwelle gesetzt. Der Einstellparameter steuert die Empfindlichkeit der Fehlererkennung (also ob bereits kleine oder erst große Abweichungen vom trainierten Modell zu einer roten Ampel führen) im Zuge der anschließenden Überwachung des Anlagenteils bzw. der Teilanlage und kann optional geändert werden. Ebenso ist die Gelbschwelle als prozentualer Anteil der Rotschwelle optional änderbar.
Gemäß dem Ampelschema (grün= OK, gelb= Achtung, rot = Fehler) werden die Gelb- und eine Rotschwelle gesetzt, die es im Fall der Überwachung (Echtzeit) bzw. der Analyse (Offline) erlaubt, den Anwender über den Gesundheitszustand (Asset-Status) des Anlagenteils bzw. der Teilanlage zu informieren (vergl. Abb. 1).
Die Platzierung der Ampeln zur Visualisierung des Process Unit Status ausgehend aus der berechneten Basisschwelle kann vorzugsweise vom Nutzer über das User Interface angepasst werden. Auf Bedienbildern wird typischerweise für jede Process Unit eine Ampel (OK, Erhöhte Aufmerksamkeit, Fehler) auf dem zugehörigen Bedienbild visualisiert. Später können mögliche Abweichungen auf diese Weise in Echtzeit von den Anlagenfahrern registriert werden. Bei "Gelb" oder "Rot" ist der Prozessexperte zwecks Detailanalyse zu informieren.

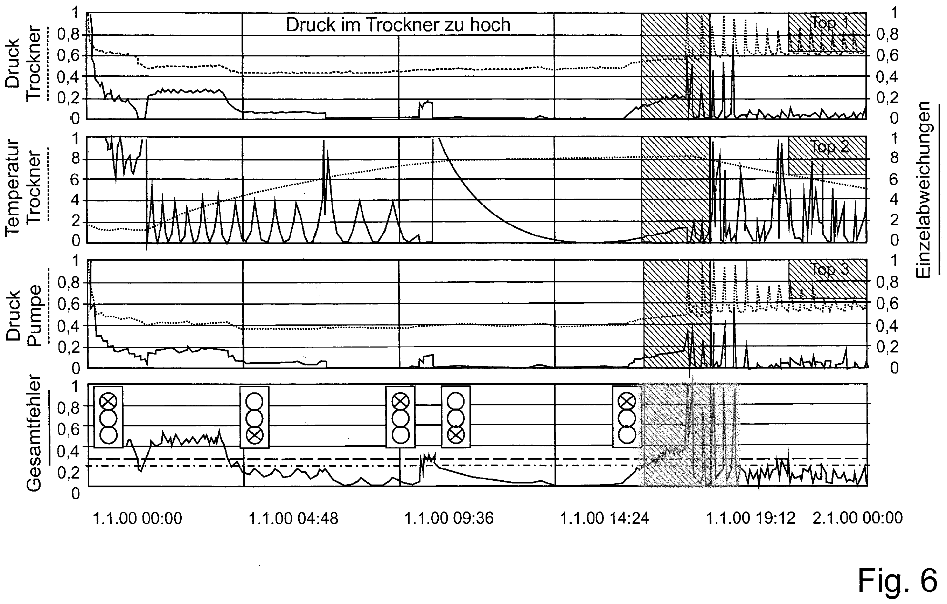

Zur besseren Übersicht der abweichenden Prozessparameter können die Prozessparameterabweichungen von einem üblicherweise von mehreren Überwachungsvektoren, absteigend nach Größe (z. B. in Form eines Top 10) graphisch zugeordnet dargestellt werden (Fig 6).
Zusätzlich kann für jeden Prozessparameter sein prozentualer Anteil am Gesamtabweichungsfehler berechnet und graphisch dargestellt werden.

Weiterer Gegenstand der Anmeldung ist eine Computerprogramm bzw. eine Software zur Durchführung des computer-implementiertes Verfahrens.

Weiterer Gegenstand der Erfindung ist ein Computersystem zur Überwachung von prozesstechnisch zusammenhängenden Anlagenteilen, welche einer oder mehreren Prozess Units umfassen, umfassend folgende Module:
a) Ein User Interface zur Definition i) von zu überwachenden M Prozessparametern und ii) Input der Messbereichsgrenzen der M Prozessparameter einer oder mehreren zu überwachenden Process Units,
b) Ein Modul zur Definition der Prozess Unit zur Speicherung des Inputs i) und ii), verbunden mit dem User Interface,
c) ein Datenbankmodul zum Import und zur Speicherung von Lerndatenphasen, Lernvektoren und Überwachungsvektoren über ein Daten-Interface, wobei das Datenbankmodul mit dem Modul zur Definition der Prozess Unit und mit dem User Interface verbunden ist,
d) ein neuronal-Netz-basiertes Modellmodul zum vollautomatischen Trainieren eines neuronalen-Netz-basierten Modells durch automatische Berechnung von:
   - Best-Matching Units und einer selbstorganisierenden Neuronenkarte der Best-Matching-Units,
   - Ein Abweichungsfehler als der Abstand jedes Prozessparameterwertes eines Lernvektors an das entsprechende Prozessparameterwert des ihm zugeordneten Best Matching Units,
   - für jeden der N Lernvektoren ein Gesamtabweichungsfehler als die Summe der Abweichungsfehler seiner M Prozessparameter,
   sowie zur Zuordnung eines Überwachungsvektors zu einer der Best-Matching Unit der selbstorganisierenden Neuronenkarte und Berechnung von:
   - Einem Abweichungsfehler als der Abstand jedes Prozessparameterwertes des Überwachungsvektors an das entsprechende Prozessparameterwert des ihm zugeordneten Best Matching Units,
   - für jeden der Überwachungsvektoren einem Gesamtabweichungsfehler als die Summe der Abweichungsfehler seiner M Prozessparameter,
e) ein Modul zur Analyse der Abweichungsfehler durch automatische Ermittlung eines Bereichs der berechneten Gesamtabweichungsfehler, Einsortierung der Lern- und Überwachungsvektoren anhand deren Gesamtabweichungsfehler in dem ermittelten Bereich, wobei das Modul zur Analyse der Abweichungsfehler mit dem Modellmodul verbunden ist, und
   wobei das Modul zur Analyse der Abweichungsfehler mit dem User Interface für die Darstellung der Einsortierung der Überwachungsvektoren im Bereich der berechneten Gesamtabweichungsfehler verbunden ist.

Das erfindungsgemäße Systems ist besonders vorteilhaft für alle nicht standardmäßig mit einer Eigendiagnose ausgerüsteten Anlagenkomponente, wie etwa Kesseln und Rohrleitungen, Wärmetauschern oder Destillationskolonnen [Hotop, R., Ochs, S., Ross, T.: Überwachung von Anlagenteilen, atp edition, 06/2010]. Der Grundintention des erfindungsgemäßen Systems folgend, werden die Prozessparameter einer Process Unit nicht für sich allein, isoliert, betrachtet. Vielmehr korreliert das System alle Parametersätze miteinander und erfasst auf diese Weise das charakteristische Zusammenspiel der einzelnen Komponenten der zu überwachenden funktionalen Einheit. Es erlernt und überprüft dabei deren Abhängigkeiten und leitet daraus summarische Statusaussagen ab, etwa im Sinne eines Ampelschemas, bei dem zwischen Gutzustand ("grün"), sich abzeichnendem Handlungsbedarf ("gelb") und Fehlfunktion ("rot") unterschieden wird.

Zudem hat sich gezeigt, dass der Process Unit Monitor auch gewinnbringend zur Überwachung von störungsanfälligen Asset-Kombinationen eingesetzt werden kann, für die prinzipiell auch bereits Einzelüberwachungslösungen auf dem Markt existieren. Zum einen um bestimmte Typen von Anlagenproblemen abzudecken, die bisher nicht erfasst wurden oder auch zum anderen, um kausale Wirkzusammenhänge in den Verschlechterungsprozessen aufzudecken, beispielsweise wenn sich Anlagenprobleme innerhalb einer Teilanlage von Asset zu Asset fortpflanzen.

Auf der anderen Seite verdeutlicht Bild 1, dass Process Unit Monitoring richtig verstanden bereits einige Elemente klassischer Prozessführung (Performance Monitoring) enthält. Allerdings nicht im Sinne einer Prozessführung nach Key Performance Indikatoren, um einen optimaleren Fahrzustand zu finden. Sondern eher im Sinne einer gezielten Überwachung von bestimmten Teilprozessen, um Informationen über nachlassende Asset Performance abzuleiten, die nicht unmittelbar auf eine Beeinträchtigung der Asset-Gesundheit zurückzuführen ist. Etwa durch Verlassen der optimalen Fahrweise der Anlage.
- Fig 1: zeigt eine schematische Darstellung des Plant Asset Management (PAM), wobei Process Unit Monitoring mit Condition und Performance Monitoring kombiniert wird.
- Fig. 2: zeigt ein Histogramm der Gesamtabweichungsfehler als Ereignishäufigkeit pro Wertebereichssegment.
- Fig. 3: zeigt Schwellwerte zur Überwachung und Analyse des Asset Status.
- Fig. 4: zeigt eine schematische Darstellung der Architektur des erfindungsgemäßen Systems mit Schnittstellen.
- Fig 5: zeigt eine schematische Darstellung der Systemintegration in die Anlagelandschaft.
- Fig. 6: zeigt eine graphische Darstellung von nach Größe zugeordneten Parameterabweichungen (Top-10 Darstellung, wobei zur Übersicht lediglich die ersten 3 Parameter angezeigt werden).
- Fig. 7: zeigt eine schematische Darstellung der Training und Zuordnungsphase.

## Patentansprüche

1. Computer-implementiertes Verfahren zur Überwachung von prozesstechnisch zusammenhängenden Anlagenteilen, die eine oder mehrere Prozess Units umfassen, mit folgenden Schritten:
Im Schritt a) werden eine Anzahl M von zu überwachenden Prozessparameter, und deren Messbereichsgrenzen zur Definition eines Gutzustandes einer oder mehrerer zu überwachender Process Units in einem User Interface eingegeben, und an ein Modul zur Definition der Prozess Unit weitergeleitet,
Im Schritt b) werden Lerndatenphasen bestehend aus Lernvektoren in ein Datenbankmodul importiert,
Im Schritt c) werden in dem Datenbankmodul eine Anzahl von N Lernvektoren aus den Lerndatenphasen aus b) über das User Interface oder eine Anzahl von N Lernvektoren aus den Lernphasen automatisch anhand der Messbereichsgrenzen aus Schritt a) selektiert,
Im Schritt d) werden die Lernvektoren aus Schritt c) aus dem Datenbankmodul in ein damit verbundenes Modellmodul übertragen; im Modellmodul wird ein neuronales-Netz-basiertes Modell dadurch erzeugt, dass jeder Lernvektor zu einer Best Matching Unit mit einem geringsten Abstand zum Lernvektor zugeordnet wird, wobei diese Best Matching Unit durch ihre M Prozessparameter definiert ist, und die Best Matching Units eine selbstorganisierende Neuronenkarte bilden,
Im Schritt e) werden anzahlmäßig MxN Abweichungsfehler und eine Anzahl von N Gesamtabweichungsfehler in einer Matrix automatisch berechnet, wobei:
• für jeden der N Lernvektoren ein Abweichungsfehler als der Abstand jedes Prozessparameterwertes eines Lernvektors an den entsprechenden Prozessparameterwert der ihm zugeordneten Best Matching Unit ,
• für jeden der N Lernvektoren ein Gesamtabweichungsfehler als die Summe der Abweichungsfehler seiner M Prozessparameter,
Im Schritt f) wird der Gesamtabweichungsfehler pro Lernvektor aus Schritt e) in einem Modul zur Analyse der Abweichungsfehler übertragen und dort ein Minimal- und Maximalwert der berechneten N Gesamtabweichungsfehler automatisch ermittelt, und mindestens eine Schwelle automatisch mit den folgenden Schritten gesetzt wird:
- der Minimal- und Maximalwerte ermittelte Wertebereich wird in von 10 bis 100 äquidistante Segmente unterteilt,
- die Gesamtabweichungsfehler der Lernvektoren werden automatisch in die Segmente einsortiert,
- wobei die Schwelle die erste Segmentstützstelle ist, für die gilt, dass sich mehr oder gleich 5 bis 15%, der höchsten Gesamtabweichungsfehler innerhalb der Segmente ausgehend vom Maximalwert befinden und die Schwelle sich im Bereich der obersten 7/10 der Segmente ausgehend vom Maximalwert befindet, zur Überwachung der Prozess Units erfolgt im Schritt g) eine automatische Übertragung von Überwachungsvektoren der Prozess-Unit über die Zeit in das Datenbankmodul, wobei der Überwachungsvektor durch seine online überwachten M Prozessparameter zu einem Zeitstempel t definiert ist, gefolgt durch die Übertragung des Überwachungsvektors in das Modellmodul,
im Schritt h) erfolgt in dem Modellmodul eine automatische Zuordnung jedes Überwachungsvektors aus Schritt g) zu einer der Best Matching Unit der Neuronenkarte (SOM) aus Schritt c) durch Vergleich der Prozessparameterwerte des Überwachungsvektors mit den Prozessparameterwerten jeder Best Matching Unit der Neuronenkarte und Selektion auf Basis des geringsten Abstands,
im Schritt i) erfolgt die Berechnung der Abweichungsfehler und der Gesamtabweichungsfehler des Überwachungsvektors, wobei der Abweichungsfehler als der Abstand jedes Prozessparameterwertes des Überwachungsvektors an den entsprechenden Prozessparameterwert der ihm zugeordneten Best Matching Unit ist, und die Gesamtabweichungsfehler die Summe der Abweichungsfehler seiner M Prozessparameter ist,
im Schritt j) wird der Gesamtabweichungsfehler des Überwachungsvektors in das Modul zur Analyse der Abweichungsfehler übertragen, mit dem Minimal- und Maximalwert der berechneten N Gesamtabweichungsfehler aus f) verglichen und der Vergleich wird über das User Interface angezeigt.

2. Computer-implementiertes Verfahren gemäß Anspruch 1, wobei die berechnete Schwelle durch ein Toleranzbereich in Form eines ganzzahligen positiven Faktors von üblicherweise 2-4 multipliziert wird.

3. Computerprogramm, umfassend Befehle, die bei der Ausführung des Programms durch einen Computer diesen veranlassen, alle Schritte des Verfahrens nach einem der Ansprüche 1 oder 2 auszuführen.

4. Computersystem mit Mitteln zur Durchführung aller Schritte des Computer-implementierten Verfahrens nach einem der Ansprüche 1 oder 2.

## Claims

1. Computer-implemented method for monitoring installation parts which are connected by process engineering and comprise one or more process units, having the following steps:
in step a), a number M of process parameters to be monitored and their measurement range limits for defining a good state of one or more process units to be monitored are input at a user interface and are forwarded to a module for defining the process unit,
in step b), learning data phases consisting of learning vectors are imported to a database module, in step c), in the database module, a number of N learning vectors from the learning data phases from b) are selected via the user interface or a number of N learning vectors from the learning phases are automatically selected using the measurement range limits from step a),
in step d), the learning vectors from step c) are transmitted from the database module to a model module connected to the latter; in the model module, a model based on a neural network is generated by assigning each learning vector to a best matching unit having a shortest distance from the learning vector, wherein this best matching unit is defined by its M process parameters, and the best matching units form a self-organizing neural map,
in step e), MxN deviation errors and a number of N total deviation errors are automatically calculated in a matrix in number form, wherein:
• for each of the N learning vectors, a deviation error as the distance between each process parameter value of a learning vector and the corresponding process parameter value of the best matching unit assigned to it,
• for each of the N learning vectors, a total deviation error as the sum of the deviation errors of its M process parameters,
in step f), the total deviation error for each learning vector from step e) is transmitted to a module for analysing the deviation errors and a minimum and a maximum value of the calculated N total deviation errors are automatically determined there, and at least one threshold is automatically set using the following steps:
- the range of values determined minimum and maximum values is subdivided into 10 to 100 equidistant segments,
- the total deviation errors of the learning vectors are automatically sorted into the segments,
- wherein the threshold is the first segment supporting point, for which greater than or equal to 5 to 15% of the highest total deviation errors are within the segments starting from the maximum value, and the threshold is in the range of the uppermost 7/10 of the segments starting from the maximum value,
in step g), in order to monitor the process units, monitoring vectors of the process unit are automatically transmitted over time to the database module, wherein the monitoring vector is defined by its M process parameters monitored online at a time stamp t, followed by the transmission of the monitoring vector to the model module,
in step h), each monitoring vector from step g) is automatically assigned to one of the best matching units of the neural map (SOM) from step c) in the model module by comparing the process parameter values of the monitoring vector with the process parameter values of each best matching unit of the neural map and making a selection on the basis of the shortest distance,
in step i), the deviation errors and the total deviation errors of the monitoring vector are calculated, wherein the deviation error is the distance between each process parameter value of the monitoring vector and the corresponding process parameter value of the best matching unit assigned to it, and the total deviation error is the sum of the deviation errors of its M process parameters,
in step j), the total deviation error of the monitoring vector is transmitted to the module for analysing the deviation errors, is compared with the minimum and maximum values of the calculated N total deviation errors from f), and the comparison is displayed via the user interface.

2. Computer-implemented method according to Claim 1, wherein the calculated threshold is multiplied by a tolerance range in the form of an integer positive factor of usually 2-4.

3. Computer program comprising instructions which, during execution of the program by a computer, cause the latter to carry out all steps of the method according to either of Claims 1 and 2.

4. Computer system having means for carrying out all steps of the computer-implemented method according to either of Claims 1 and 2.

## Revendications

1. Procédé implémenté par ordinateur permettant de surveiller des parties d'installation liées au niveau du processus qui comprennent une ou plusieurs unités de processus, comprenant les étapes suivantes :
à l'étape a), un nombre M de paramètres de processus à surveiller et leurs limites de plage de mesure sont entrés dans une interface utilisateur pour définir un état correct d'une ou de plusieurs unités de processus à surveiller et transmis à un module pour définir l'unité de processus,
à l'étape b), des phases de données d'apprentissage composées de vecteurs d'apprentissage sont importées dans un module de base de données,
à l'étape c), un nombre de N vecteurs d'apprentissage parmi les phases de données d'apprentissage de l'étape b) est sélectionné par l'intermédiaire de l'interface utilisateur, ou un nombre de N vecteurs d'apprentissage parmi les phases d'apprentissage est sélectionné automatiquement à l'aide des limites de plage de mesure de l'étape a),
à l'étape d), les vecteurs d'apprentissage de l'étape c) sont transmis du module de base de données à un module de modèle relié à celui-ci ; dans le module de modèle, un modèle basé sur un réseau neuronal est généré en ce que chaque vecteur d'apprentissage est associé à un neurone correspondant le mieux ayant la plus petite distance par rapport au vecteur d'apprentissage, ce neurone correspondant le mieux étant définie par ses M paramètres de processus, et les unités correspondant le mieux constituant une carte neuronale auto-organisatrice,
à l'étape e), MxN erreurs d'écart et un nombre de N erreurs d'écart totales sont automatiquement calculées en nombre dans une matrice, dans lequel :
• pour chacun des N vecteurs d'apprentissage, une erreur d'écart comme la distance de chaque valeur de paramètre de processus d'un vecteur d'apprentissage par rapport à la valeur de paramètre de processus du neurone correspondant le mieux qui lui est associée,
• pour chacun des N vecteurs d'apprentissage, une erreur d'écart totale comme la somme des erreurs d'écart de ses M paramètres de processus,
à l'étape f), l'erreur d'écart totale pour chaque vecteur d'apprentissage de l'étape e) est transférée dans un module destiné à l'analyse de l'erreur d'écart, et une valeur minimale et une valeur maximale des N erreurs d'écart totales calculées y sont établies automatiquement, et au moins un seuil est fixé automatiquement par les étapes suivantes :
- la plage de valeurs établie les valeurs minimale et maximale est divisée en 10 à 100 segments équidistants,
- les erreurs d'écart totales des vecteurs d'apprentissage sont classées automatiquement dans les segments,
- le seuil étant le premier point nodal de segment pour lequel il est vrai qu'un pourcentage supérieur ou égal à 5 à 15 % des erreurs d'écart totales les plus élevées se trouve à l'intérieur des segments en partant de la valeur maximale, et le seuil se trouve au niveau des 7/10 des segments supérieurs en partant de la valeur maximale,
pour surveiller les unités de processus, à l'étape g), une transmission automatique de vecteurs de surveillance de l'unité de processus est effectuée dans le temps au module de base de données, le vecteur de surveillance étant défini par ses M paramètres de processus surveillés en ligne pour un horodatage t, suivi de la transmission du vecteur de surveillance au module de modèle,
- à l'étape h), dans le module de modèle, une association automatique de chaque vecteur de surveillance de l'étape g) à l'un des neurones de la carte neuronale (SOM) de l'étape c) correspondant le mieux est effectuée par une comparaison des valeurs de paramètres de processus du vecteur de surveillance avec les valeurs de paramètres de processus de chaque neurone correspondant le mieux de la carte neuronale et par une sélection sur la base de la plus petite distance,
à l'étape i), le calcul des erreurs d'écart et des erreurs d'écart totales du vecteur de surveillance est effectué, l'erreur d'écart étant définie comme la distance de chaque valeur de paramètre de processus du vecteur de surveillance par rapport à la valeur de paramètre de processus correspondante du neurone correspondant le mieux qui lui est associée, et les erreurs d'écart totales étant la somme des erreurs d'écart de ses M paramètres de processus,
à l'étape j), l'erreur d'écart totale du vecteur de surveillance est transmise au module destiné à l'analyse des erreurs d'écart, comparée à la valeur minimale et à la valeur maximale des N erreurs d'écart totales calculées sous f), et la comparaison est affichée par l'intermédiaire de l'interface utilisateur.

2. Procédé implémenté par ordinateur selon la revendication 1, dans lequel le seuil calculé est multiplié par une zone de tolérance sous la forme d'un facteur positif entier habituellement de 2 à 4.

3. Programme informatique, comprenant des instructions qui, lorsque le programme est exécuté par un ordinateur, ont pour effet que celui-ci exécute toutes les étapes du procédé selon l'une quelconque des revendications 1 et 2.

4. Système informatique comprenant des moyens permettant d'exécuter toutes les étapes du procédé implémenté par ordinateur selon l'une quelconque des revendications 1 et 2.
